# EUROPEAN PATENT APPLICATION

(11) **EP 2 181 836 A2**
(43) Date of publication of application: **05.05.2010**
(21) Application number: 09174960.6
(22) Date of filing: 03.11.2009
(51) Int. Cl.: B29D 11/00

(54) **Machined lens molds and methods for making and using same**

(30) Priority: 21.10.2009 US 603474; 03.11.2008 US 110864 P
(71) Applicant: CooperVision International Holding Company, LP, St. Michael (BB)
(72) Inventor: Davison, Chris, Southampton SO31 4NH (GB)
(74) Representative: Critten, Matthew Peter

(57) **Abstract**

Molds for making ophthalmic lenses are generally discussed herein with particular discussions extended to plastic injection molded ophthalmic lens molds that are subsequently machined to have customized optical quality lens-defining surfaces for producing customized ophthalmic lenses, including contact lenses. The present molds can be used to form multifocal zones, ballast zones, diagnostic marks and the like on the ophthalmic lenses without the need for making post-cure modifications to the lenses.

## Description

Molds for making ophthalmic lenses are generally discussed herein with particular discussions extended to plastic lens molds made by injection molding that are subsequently machined to have optical quality lens-defining surfaces for producing contact lenses, including silicone hydrogel contact lenses. Methods of making silicone hydrogel contact lenses include using contact lens molds that have been machined.

### CROSS-REFERENCE TO RELATED APPLICATION

This is a regular utility application of provisional application No. 61/110,864, filed November 3, 2008, the contents of which are expressly incorporated herein by reference as if set forth in full.

### BACKGROUND

Hydrogel contact lenses are popular due to their comfortable, soft, and hydrophilic properties compared to rigid gas permeable (RGP) contact lenses. Soft hydrogel contact lenses are often manufactured by cast molding a polymerizable lens precursor composition in a two part mold where each mold half has an optically acceptable lens-defining surface consistent with the desired final lenses. In conventional cast molding procedures, each mold half is injection molded in an injection molding apparatus and includes an optically acceptable lens-defining surface resulting from the injection molding process. Cast molding procedures are typically used to mass produce large volumes of contact lenses, including silicone hydrogel contact lenses, with a fixed number of pre-determined properties or specifications. Current cast molding procedures are not practical in producing customized contact lenses, such as contact lenses that are made to order based on an individual's prescription or on a limited number of prescriptions, or in producing contact lenses with properties or specifications that tend to be ordered or prescribed less frequently. For example, high volume cast molding procedures in which each mold half of a mold assembly is only injection molded and includes parameters to shape the final optical properties of the lenses is not desirable when producing less common lens powers or lens shapes, including lenses that are considered extended range lenses. Instead, customized or made to order contact lenses have been described as being produced by lathing RGP or soft lenses from polymerized contact lens buttons. In addition, lathed silicone hydrogel contact lenses have been described which include lathing the polymerized silicone hydrogel lens forming material into a contact lens, such as by U.S. Pat. No. 5,260,000 and U.S. Publication Nos. 2006/0001184 and 2006/0004165.

### SUMMARY

Methods of manufacturing soft ophthalmic lenses, such as silicone hydrogel contact lenses, as well as methods of manufacturing ophthalmic lens mold sections, and ophthalmic lens mold assemblies, have been invented. Utilizing the present methods and ophthalmic lens mold sections, it is possible to produce customized or made-to-order contact lenses in a more cost effective manner than using conventional cast molding techniques. It is also possible to cost-effectively produce contact lenses, such as silicone hydrogel contact lenses, with specifications, such as prescriptions and the like, that are difficult to produce in a cost-effective manner using conventional cast molding processes. For example, where lenses having frequently prescribed lens powers may be produced using conventional cast molding processes, such as by injection molding contact lens molds with the desired lens forming surfaces, lenses that have less frequently prescribed lens powers may be cost-effectively produced using the present methods. Examples of these lenses can be understood to be extended range lenses.

An aspect of the present invention may be implemented by a method for producing an ophthalmic lens mold section, comprising: forming a plastic ophthalmic lens mold section blank from a plastic material; and removing a portion of the ophthalmic lens mold section blank to form an ophthalmic lens mold section including an ophthalmic lens forming surface having a radius of curvature corresponding to a back surface or a front surface of an ophthalmic lens produced using the ophthalmic lens mold section.

A further aspect of the present invention further includes an ophthalmic lens mold assembly, comprising: a first plastic mold section including a first lens forming surface having a concave curvature; a second plastic mold section including a second lens forming surface having a convex curvature, the second mold section engaged with the first mold section to form an ophthalmic lens shaped cavity between the first lens forming surface and the second lens forming surface; wherein the first lens forming surface, the second lens forming surface, or both the first and second lens forming surfaces include a lathed surface portion.

In another aspect of the present invention, there is provided an ophthalmic lens mold assembly, comprising: a first mold section including a lens-defining surface; a first surface section of the lens-defining surface comprising a lathed zone formed by a lathe assembly and a second surface section of the lens-defining surface formed by injection molding; a second mold section comprising a lens-defining surface; and wherein the first mold section is engaged to the second mold section and the lens-defining surface of the first mold section directly faces the lens-defining surface of the second mold section.

Embodiments of the present invention also include a method for producing an ophthalmic lens. An example of such a method comprises: providing a first plastic mold section blank; lathing a portion of the first plastic mold section blank to produce a lathed first ophthalmic lens mold section including a lathed ophthalmic lens-forming surface; placing the first ophthalmic lens mold section in contact with a second plastic ophthalmic lens mold section to form an ophthalmic lens mold assembly having an ophthalmic lens shaped cavity containing a polymerizable ophthalmic lens precursor composition; and curing the polymerizable ophthalmic lens precursor composition in the ophthalmic lens mold assembly to form a polymerized ophthalmic lens product.

An alternative method provided herein for producing an ophthalmic lens comprises the step: providing a first ophthalmic lens mold section including a first ophthalmic lens-defining surface; placing a polymerizable lens precursor composition in contact with the first ophthalmic lens-defining surface; placing a second ophthalmic lens mold section in contact with the first ophthalmic lens mold section to form an ophthalmic lens mold assembly including an ophthalmic lens shaped cavity between the first ophthalmic lens-forming surface and a second ophthalmic lens-forming surface of the second ophthalmic lens mold section, and containing the polymerizable lens precursor composition; curing the polymerizable lens precursor composition in the ophthalmic lens mold assembly to form a polymerized product, wherein the lens-forming surface of the first ophthalmic lens mold section, the second ophthalmic lens mold section, or both, includes a lathed portion.

In yet another method, steps include producing a plurality of ophthalmic lenses having different ophthalmic lens specifications using one set of ophthalmic lens mold inserts comprising: forming a plurality of first plastic ophthalmic lens mold section blanks and a plurality of second plastic ophthalmic lens mold section blanks using one set of ophthalmic lens mold inserts; lathing a portion of at least one of the first mold section blanks and the second mold section blanks to form a lathed lens-forming surface of an ophthalmic lens mold section effective in forming a polymerized ophthalmic lens having a first set of ophthalmic lens specifications when obtained from an ophthalmic lens mold assembly including one first mold section engaged with one second mold section; lathing a portion of at least one different first mold section blanks and different second mold section blanks to form a lathed lens-forming surface of a second ophthalmic lens mold section effective in forming a polymerized ophthalmic lens having a second different set of ophthalmic lens specifications when obtained from an ophthalmic lens mold assembly including one first mold section engaged with one second mold section; providing a polymerizable ophthalmic lens precursor composition in an ophthalmic lens shaped cavity of each of the ophthalmic lens mold assemblies; and curing the polymerizable ophthalmic lens precursor composition to form a plurality of polymerized ophthalmic lens products having different ophthalmic lens specifications.

In still yet another method, steps of the method include forming an ophthalmic lens without post-cure lathing. Such a method comprises: forming a first mold section and a second mold section by injection molding, wherein the first mold section and the second mold section each comprises a lens-defining surface comprising a spherical radius of curvature; lathing the lens-defining surface of at least one of the first mold section and the second mold section so that the spherical radius of curvature changes to a second spherical radius of curvature; adding lens forming material into a lens cavity defined by a space formed by engaging the first mold section with the second mold section; and curing the lens forming material to produce an ophthalmic lens product without post-cure lathing the ophthalmic lens product.

Not to limit the range and scope of the present invention, aspects of the present invention further include a method for forming two ophthalmic lenses of different correction parameters without post-cure lathing comprising the steps: forming a first mold assembly and a second mold assembly from a metal mold tool set, each mold assembly comprising a first mold section and a second mold section; lathing a lens-defining surface of at least one of the first mold section and the second mold section of the first mold assembly to provide a surface comprising a spherical radius of curvature R1; lathing a lens-defining surface of at least one of the first mold section and the second mold section of the second mold assembly to provide a surface comprising a spherical radius of curvature R2; adding a polymerizable ophthalmic lens precursor composition in a lens forming cavity of each of the first mold assembly and the second mold assembly; forming a first ophthalmic lens product from the first mold assembly; forming a second ophthalmic lens product from the second mold assembly; and wherein R2 has a different dimension than R1.

In yet another alternative method for practicing aspects of the present invention there is provided a method for producing a customized ophthalmic lens mold assembly. The method comprises selecting a standard ophthalmic mold assembly from a plurality of ophthalmic standard mold assemblies produced from a set of metal mold inserts, said standard ophthalmic mold assembly comprising a first mold section and a second mold section for defining a first lens forming mold cavity having a first configuration and modifying a surface of the first mold section, the second mold section, or both so that the first mold section and the second mold section define a second lens forming mold cavity having a second configuration.

These and other features and advantages of the present invention will become appreciated as the same become better understood with reference to the specification, claims and appended drawings.

### BRIEF DESCRIPTION OF THE DRAWINGS

The drawings include:

FIG. 1 is a perspective view of a lens mold section provided in accordance with aspects of the present invention;

FIG. 2 is a perspective cross-sectional view of the lens mold section of FIG. 1 taken along line 2-2;

FIG. 3 is a cross-sectional side view of two lens-mold sections assembled together to form a lens-mold assembly;

FIG. 4 is a top view of a lens-mold section as modified by the method provided in accordance with aspects of the present invention;

FIG. 5 is a top view of an alternative lens-mold section as modified by the method provided in accordance with aspects of the present invention;

FIG. 6 is a top view of yet another alternative lens-mold section as modified by the method provided in accordance with aspects of the present invention;

FIG. 7 is a top view of still yet another alternative lens-mold section as modified by the method provided in accordance with aspects of the present invention;

FIG. 8 is a schematic diagram of a lathe assembly for machining a lens-defining surface provided in accordance with aspects of the present invention;

FIG. 9 is an enlarged schematic view of the lens mold-section of FIG. 8, depicting a pattern to be machined for forming a customized lens-forming surface;

FIG. 10 is a cross-sectional schematic view of a rigging assembly for mounting a lens-mold section during a lathing procedure;

FIG. 11 is an exemplary schematic of an alternative lathe assembly for machining a lens mold section in a transverse direction relative to the axis of rotation of the mandrel; and

FIG. 12 is a flow diagram of a method for forming a customized ophthalmic lens from a mold assembly.

### DETAILED DESCRIPTION

The detailed description set forth below in connection with the appended drawings is intended as a description of the presently preferred embodiments of machined lens molds formed by plastic injection molding techniques provided in accordance with aspects of the present invention. It is not intended to represent the only forms in which the present invention may be constructed or utilized. The description also sets forth the features and the steps for constructing and using the machined lens molds in connection with the illustrated embodiments. It is to be understood, however, that the same or equivalent functions and structures may be accomplished by different embodiments that are also intended to be encompassed within the spirit and scope of the invention.

As used herein, reference to "first" and "second" is relative and made to distinguish two different elements or components only and not to be structurally limiting.

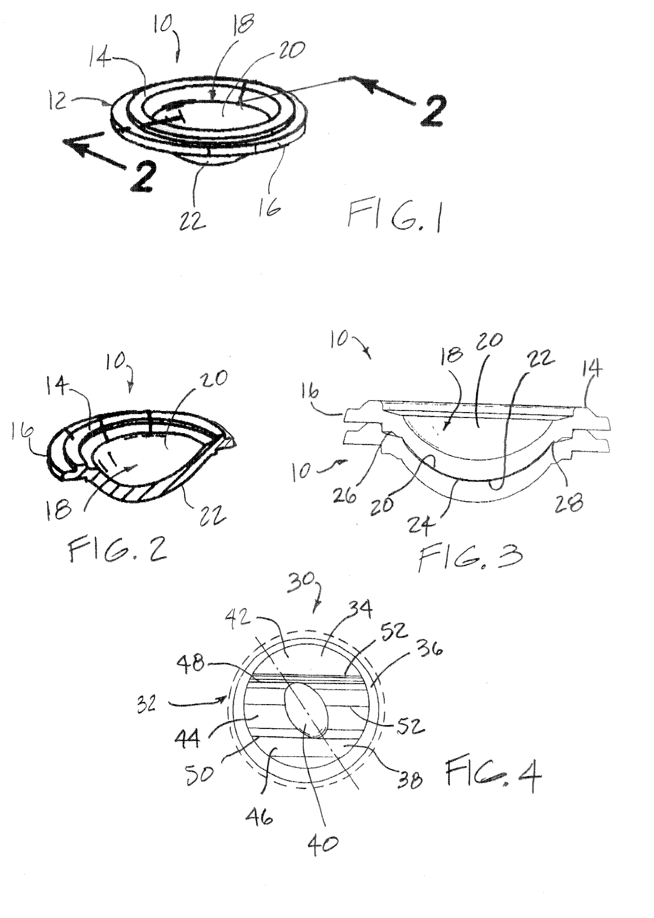

Turning now to FIG. 1, a mold section 10 provided in accordance with aspects of the present invention is shown, which has been disclosed in co-pending application Ser. No. 11/200,848, filed August 9, 2005, entitled "CONTACT LENS MOLDS AND SYSTEMS AND METHODS FOR PRODUCING SAME", the contents of which are expressly incorporated herein by reference. Generally speaking, the mold section 10 comprises a body section 12 comprising a flange region 14 and an outer concentric shoulder 16. The flange region 14 at least partially circumscribes an optic region 18 having a first lens defining surface 20 and an opposed second lens defining surface 22. Two mold sections 10 when combined form a mold assembly, as further discussed below. Depending on how the particular mold section 10 is used, the first lens defining surface 20 may be considered a female concave surface for forming the front curve or anterior surface of an ophthalmic lens when it receives a convex second lens defining surface 22 of another mold section 10. When assembled in this configuration, the second lens defining surface 22 is considered a convex surface for forming the back curve or posterior surface of an ophthalmic lens.

Although the single mold section 10 illustrated in FIG. 1 has two lens defining surfaces 20, 22, other mold sections useful with the present methods may only have one lens defining surface, meaning a surface that provides an optical quality surface to a lens formed against the lens defining surface. The lens defining surface can either be concave or convex depending on which mold section is being referred to. The surface opposing the lens defining surface on a single mold section does not need to be an optical quality surface. Thus, in accordance with the present methods, a single mold section may have only one lens defining surface, which has been shaped by lathing a portion of an injection molded article. That lathed portion forms a front surface or back surface of a hydrogel contact lens, such as a silicone hydrogel contact lens.

FIG. 2 is a cross-sectional perspective view of the mold section 10 of FIG. 1 taken along line 2-2. The first lens defining surface 20 and the second lens defining surface 22 are shown with a smooth lens-surface contour, which may be gleaned from the constant cross-sectional thickness of the optic region 18, and therefore capable of being used for making ophthalmic lenses, such as toric, aspherical, bi-focal, multi-focal, and colored contact lenses. However, as further discussed below, the optic region 18 may be machined so that as lens forming mixture cures or reacts in a lens cavity defined by the machined optic region of two adjoining mold sections 10, which define a lens shaped cavity having a shape of an ophthalmic lens, a customized contact lens is produced without the need to remove the lens from the mold assembly to machine the front and/or back lens surfaces to produce customized parameters.

The mold section 10 preferably comprises polyethylene vinyl alcohol (EVOH). Thus, embodiments of the present mold sections can be made from an EVOH based resin publicly available under the tradename SOARLITE™ S by Nippon Gohsei, Ltd. (Japan). Other suitable molding materials include polypropylene, polyethylene, polyamides, poly oxy methylene, polyethylene terephthalate, cyclic olefin co-polymers, polystyrene, polyvinyl chloride, copolymers of styrene with acrylonitrile and/or butadiene, acrylates such as poly methyl methacrylate, polyacrylonitrile, polycarbonate, polyamides, polyesters, poly(4-methlpentene-1), and the like, and combinations thereof. In one embodiment, the mold section is made of a polypropylene resin. In another embodiment, the mold section is made of a polystyrene resin.

FIG. 3 is a cross-sectional side view of two mold sections 10 in mating engagement with one another. A lens forming cavity 24 is formed at the interface between the convex second lens-defining surface 22 of one mold section 10 and the concave first lens-defining surface 20 of another mold section 10. An overflow chamber 26 is incorporated adjacent a first contact region 28 to collect excess lens forming material. The engagement of the two mold sections to form a mold assembly can be of any conventional technique. In some embodiments, the engagement is an interference fit between the mold sections. In other embodiments, the engagement is a welding of the two mold sections together.

As previously discussed, the mold section 10 may be formed with a single front curve and a single base curve for the first 20 and second 22 lens-defining surfaces, respectively. With reference to FIG. 4, in accordance with aspects of the present invention, a mold section 30 comprising a flange 32 (shown in dashed lines) surrounding a lens-defining surface 34 is shown, which comprises a plurality of zones for correcting visual abnormalities, such as astigmatism, nearsightedness, and farsightedness. The mold section 30 may have similar shapes and features as the mold section 10 shown and described with reference to FIGs. 1-3 with the exceptions discussed hereinbelow.

The lens-defining surface 34 of the mold section 30 may correspond to a convex surface of a mold section or a concave surface of a mold section. For ease of discussions, the following description relates to a concave lens-defining surface for forming a front or anterior surface of a contact lens although it applies equally to a convex lens-forming surface for forming a base or posterior surface of a contact lens.

In one exemplary embodiment of a mold section used to make toric contact lenses, the lens defining surface 34 comprises a peripheral zone 36, an inner zone 38, and a toric optic zone 40. The inner zone 38 is further delineated into a superior section 42, an intermediate section 44, which overlaps with the toric optic zone 40, and an inferior section 46. The superior section 42 is separated from the intermediate section 44 by a line 48, which is wholly imaginary and provides a point of discussion only. Likewise, the intermediate section 44 is separated from the inferior section by line 50, which is also imaginary. Transition zones or blending zones can be provided between any two zones to reduce the junction of the two zones.

In embodiments of the invention relating to the production of rotationally stabilized contact lenses, a ballast is incorporated on the lens-defining surface 34 for orienting the lens formed from said surface during blinking, which is well known in the art. The ballast is represented by a plurality of ballast marker lines 52 extending along the horizontal meridian of the lens section of the inner zone 38. The ballast may be a prism ballast type, a periballast arrangement, or other known ballast types. Additionally, the ballast may be incorporated only in the superior section 42, only in the intermediate section 44, only in the inferior section 46, or combinations thereof. Further discussions regarding dimensions, thicknesses, and ballast types are discussed in U.S. Pat. No. 6,467,903 to Back, the contents of which are expressly incorporated herein by reference.

In accordance with aspects of the present invention, the lens defining surface 34 of the mold section 30 may be formed with the toric optic zone 40, the peripheral zone 36, the inner zone 38, and the ballast zone as shown using known prior art plastic injection molding techniques and subsequently machined to a desired or prescribed topography. Alternatively, the lens defining surface 34 of the mold section 30 may comprise a single spherical radius that is machined to the desired topography.

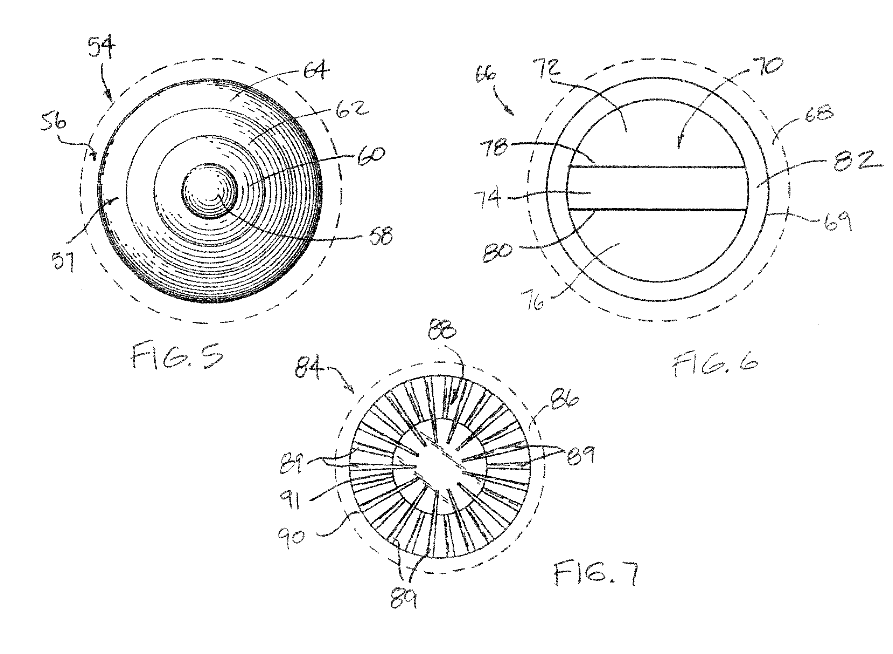

FIG. 5 is a top view of an alternative lens mold section 54 provided in accordance with aspects of the present invention, which is configured to be used to form a multifocal lens. The mold section 54 may have similar shapes and features as the mold section 10 shown and described with reference to FIGs. 1-3 with the exceptions discussed hereinbelow. The mold section 54 incorporates a flange section 56 and a lens-defining surface 57 comprising a plurality of concentric zones, including a central zone 58, a first annular zone 60, a second annular zone 62, and a third annular zone 64. The lens-defining surface 57 of the mold section 54 may correspond to a convex surface of the mold section or a concave surface of the mold section. For ease of discussions, the following description relates to a concave lens-defining surface for forming a front or anterior surface of a contact lens although it applies equally to a convex lens-forming surface for forming a base or posterior surface of a contact lens.

In one exemplary embodiment, a contact lens formed, in part, from the mold section 54 shown would have a circular central zone 58 having a spherical surface for correcting distance. The central zone has a first radius of curvature R1 disposed on a center optical axis. The first annular zone 60 is preferably a non-spherical, i.e., comprising a aspheric curvature, region comprising a plurality of radii of curvature that continuously vary from radius R1 to R3 and disposed on the same center optical axis. The second annular zone 62 preferably comprises a spherical surface comprising a radius of curvature R3 also disposed on the same center optical axis. The relative radii dimensions therefore have the following relationship: R1>R2>R3. The third annular zone 64 is provided to cover the eye for proper fit and has appropriate smooth peripheral edge for comfort, as is well known in the art.

The contact lens formed from the mold section 54 shown is configured to correct for distance in the central zone 58 and for near vision in the second annular zone 62. The first annular zone 60, which has a aspheric curve, provides gradual corrections for intermediate and close or reading corrections.

In an alternative embodiment, the central zone 58 is configured to correct for near vision and therefore comprises a concave meniscus. The second zone 62 would therefore be configured to correct for distance vision and the first zone 60 provide a transition zone for intermediate or reading corrections. Further discussions regarding incorporating a plurality of concentric zones can be found in US Pat. No. 5,574,518 to Mercure, the contents of which are expressly incorporated herein by reference. Like the mold section of FIG. 5, the mold section 54 shown may be machined to produce the various zones shown so that an ophthalmic lens formed therefrom will have the same parameters without post-cure lathing or modifications to the ophthalmic lens.

FIG. 6 is a top view of yet another alternative lens mold section 66 provided in accordance with aspects of the present invention, which is configured to be used to form a multifocal lens. The mold section 66 may have similar shapes and features as the mold section 10 shown and described with reference to FIGs. 1-3 with the exceptions discussed hereinbelow. The mold section 66 incorporates a flange section 68 and a lens-defining surface 70 circumscribed by a peripheral edge 69. The lens-defining surface 70 incorporates a plurality of horizontally extending zones 72, 74, 76, which extend from one edge of the peripheral edge 69 along a horizontal meridian of the mold section to an opposite edge. The first superior zone 72 is separated from the intermediate zone 74 by an imaginary line 78 and the intermediate zone 74 is separated from the lower inferior zone 76 by another imaginary line 80. A peripheral zone 82 extends along the outer peripheral boundary of the lens-defining surface for overall fit.

The lens-defining surface 70 of the mold section 66 may correspond to a convex surface of the mold section 66 or a concave surface of the mold section. For ease of discussions, the following description relates to a concave lens-defining surface for forming a front or anterior surface of a contact lens although it applies equally to a convex lens-forming surface for forming a base or posterior surface of a contact lens.

In one exemplary embodiment, a contact lens formed, in part, from the mold section 66 shown would have a circular outer fit zone 82 having a spherical surface of a first radius of curvature R1 disposed on a center optical axis. The first superior zone 72 is preferably a spherical surface having a single radius of curvature R2 disposed on the center optical axis for correcting distance vision. The intermediate zone 74 is preferably a transition zone and comprises an aspheric surface comprising a plurality of radii of curvature that continuously vary from R2-R4 disposed on the same center optical axis. The inferior zone comprises a spherical surface comprising a radius of curvature R4 also disposed on the same center optical axis for correcting near vision. The relative radii dimensions have the following relationship: R1>R4>R2. Further discussions regarding incorporating a plurality of laterally extending zones can be found in US Pat. No. 5,724,120 to Svochak et al., the contents of which are expressly incorporated herein by reference.

FIG. 7 is a top view of yet another alternative lens mold section 84 provided in accordance with aspects of the present invention, which is configured to form a contact lens comprising a plurality of micro-channels for promoting tear fluid exchange between an exposed surface of the eye and a surface of the eye covered by the contact lens. The mold section 84 may have similar shapes and features as the mold section 10 shown and described with reference to FIGs. 1-3 with the exceptions discussed hereinbelow. The mold section 84 incorporates a flange section 86 and a lens-defining surface 88 circumscribed by a peripheral edge 90. The lens-defining surface 88 incorporates a plurality of radially extending micro-channels 89 each extending radially from a point spaced apart from the apex of the mold section and diverging as it extends towards the peripheral edge 90.

Optionally, the plurality of micro-channels 89 have a starting point or origin that is spaced apart from the apex of the mold section that are similar or the same. Or, the micro-channels are sequentially spaced apart from the apex of the mold section a different distance, such as two different positions of origin measured from the apex of the mold section as shown in FIG. 7, to promote tear fluid exchange to different regions of the cornea. The circular line 92 shown is an imaginary line depicting where an optic zone on an anterior surface of a lens produced, in part, from the mold section 84 would overlap with the plurality of micro-channels 89. Further discussions regarding incorporating micro-channels can be found in US Pat. Nos. 6,779,888 to Marmo and 7,080,905 to Marmo et al., their contents are expressly incorporated herein by reference.

The lens-defining surface 88 of the mold section 84 may correspond to a convex surface of the mold section 66 or a concave surface of the mold section. For ease of discussions, the following description relates to a convex lens-defining surface for forming a back or posterior surface of a contact lens although it applies equally to a concave lens-forming surface for forming a front or anterior surface of a contact lens.

In one exemplary embodiment, the convex lens-defining surface 88 is formed by known plastic injection molding methods with the plurality of micro-channels 89 and relative spacing and distance from the apex of the mold section 84 as shown. Alternatively or in addition thereto, the lens-defining surface 88 may be machined using a modified lathe by turning the lens-defining surface so that it rotates perpendicularly to the axis of rotation of a mandrel of a prior art lathe, as further discussed below.

There are a number of lathe assemblies for cutting contact lens surfaces and for machining mold assemblies or sections from raw stock material in accordance with the present methods. Commercially available lathe assemblies are capable of cutting along 2, 3, 4 or more axes. In general, lathe assemblies capable of rotary cuts and interpolated cuts are preferred. Especially preferred are lathe assemblies that can perform rotationally symmetrical or rotationally non-symmetrical cuts. Other lathe assemblies useable in lathing the preferred lens mold sections described herein include those that are configured for fly cutting wherein the cutting tool, such as a diamond tip or diamond blade, is held in a spindle and the stock or component to be lathed is held to one of the cutting axes. Exemplary lathe assemblies are disclosed in U.S. Pat. Nos. 4,455,901 and 4,680,988 both to Council, Jr., the contents of which are expressly incorporated herein by reference. A particular lathe apparatus for making toric lenses is the general type made by Rank Pneumo, a division of Rank Taylor Hobson of Keene, N.H. As this lathe apparatus is commercially available and known, a complete description of all of its construction details is not necessary. The lathe apparatus includes a base and a spindle housing supported thereupon. The spindle housing houses and supports a rotatable spindle driven by a motor means for rotating the spindle. As is known, the lathe apparatus also includes sensor means for detecting the instantaneous angular position of the spindle for coordinating the movements of the cutting tool. Another lathe useful in the present methods is an Optoform lathe as available from Sterling Ultra Precision (Florida, US or Buckinghamshire, United Kingdom).

The lathe apparatus also includes a two-axis movable bed or quadrant. A tool holder is supported by a tool holder support housing, which in turn is mounted to the quadrant. The tool holder support housing houses internal oscillation means for oscillating the tool holder back and forth in the direction along an oscillation axis. In this way, a cutting tool, which is mounted to the tool holder, is oscillated back and forth along the oscillation axis to machine a surface for cylindrical correction.

A chuck is mounted at the end of the spindle for supporting a lens mold section blank or workpiece, which in accordance with aspects of the present invention comprises a mold section. The spindle rotates the workpiece, mold section, or mold section blank about the rotational axis of the spindle. As the workpiece rotates about the rotational axis of the spindle, the quadrant moves through a predetermined path using conventional CNC (Computer Numerical Control) principles. In doing so, the quadrant moves in the X and Z axes.

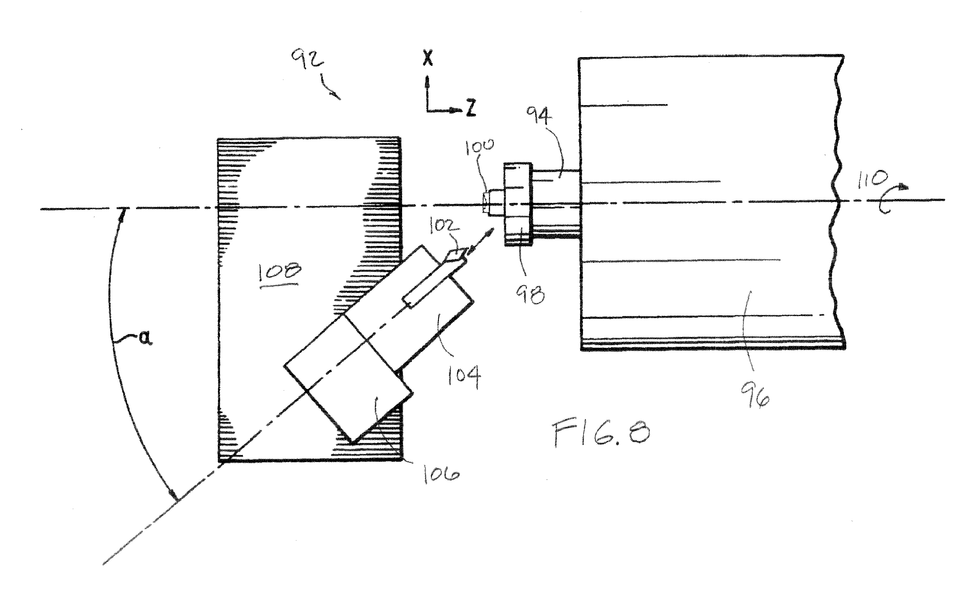

With reference to FIG. 8, a lathe assembly 92 is shown, which comprises a spindle 94 supported by a spindle housing 96. A chuck 98 located on the spindle holds a lens mold section or workpiece 100, which may have its first lens defining surface (e.g., concave surface) or its second lens defining surface (e.g., convex surface) facing in the direction of a cutting tool 102. The cutting tool 102 is mounted to a tool holder 104, which is positioned on a quadrant arm 106, and which is positioned on a quadrant 108. The spindle 94 is designed to rotate about rotational axis 110 and the cutting tool 102 may be traversed along the X and Y axes and rotate angularly around an axis defined by the quadrant 108, indicated as angle α.

Thus, the lathe assembly 92 may be used to machine a toric zone, create different radii for forming different focal zones (i.e., creating different power radii), create an aspheric zone, create a diagnostic mark, modify a base curve radius, create a ballast zone, a prism zone, a lens inversion mark, changing the lens center thickness (CT), create microchannels, etc., and combinations thereof. The various zones or parameters that are modified or added by the machining step may individually be referred to as a corrected field or parameter and collectively as corrected fields or parameters. As previously discussed, the mold section or workpiece 100 may have a single power curve on a lens-defining surface and subsequently machined with the various zones or features, or may be molded with a lens-defining surface that has one or more corrections or features (i.e., a toric zone and a ballast) and subsequently machined to a desired final finish.

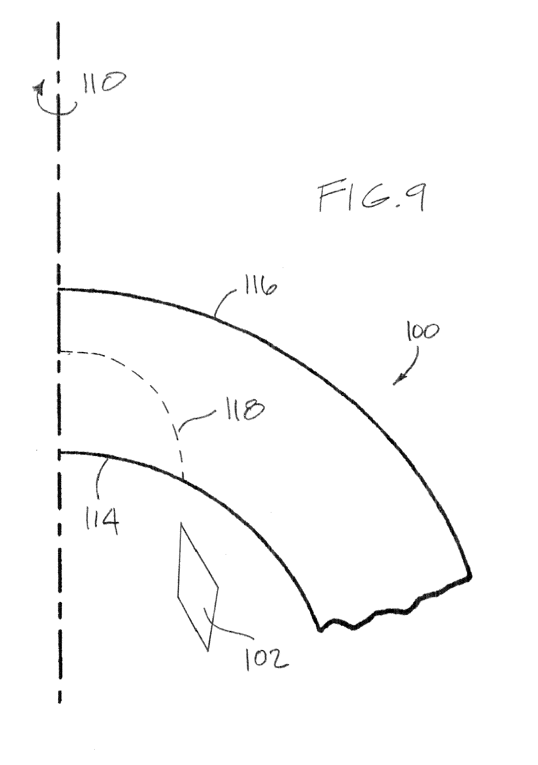

FIG. 9 is a partial sectional view of the workpiece 100 of FIG. 8. The workpiece or lens mold section 100 comprises a first lens-defining surface 114, which is a concave surface for making a front or anterior surface of a contact lens, and a second lens-defining surface 116. The first lens-defining surface 114 is configured to be cut along the dot-dashed lines 118 to create a toric zone. Subsequent to cutting the toric zone, the lens mold section 100 may be mounted eccentrically relative to the rotational axis 110 of the spindle for machining a ballast zone, as is well known in the art. Further discussions regarding using a lathe assembly comprising a cutting angle that is pivotable about an axis defined by a quadrant can be found in US Pat. No. 6,122,999 to Durazo et al., the contents of which are expressly incorporated herein by reference.

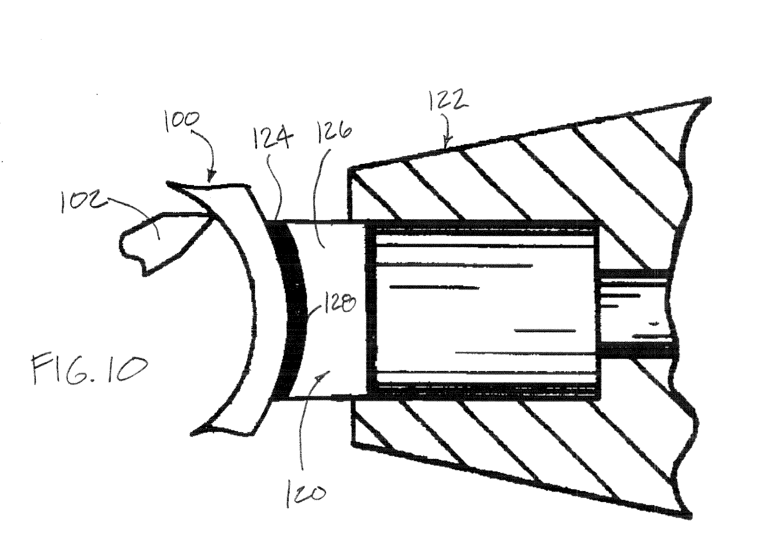

The workpiece 100 shown in FIG. 9 may be held by a chuck or lathe collet. For example, with reference to FIG. 1, the collet can grip the flange located on the mold section during machining. A vacuum chuck may also be used to grip the mold section. In an alternative embodiment, a disposable mold blank holder 120 may be used as means for coupling the workpiece 100 to a lathe collet 122 (FIG. 10). The mold blank holder 120, which may be made from a thermoplastic material, comprises a shaft section 126 for gripping by the collet 122 and a concave surface 128 having an approximate radius of curvature as the convex surface of the mold section 100. The mold section 100 may be attached to the mold blank holder 120 using a suitable adhesive, such as those commercially available from Loctite Corporate. Following the machining step, the lens mold section 100 may be removed from the adhesive using known removal process. Still alternatively, the lens mold section may include detents for receiving a temporary shaft member. A lathe collet can then grab onto the temporary shaft member during machining. Subsequently, the temporary shaft member can be removed from the lens section and discarded.

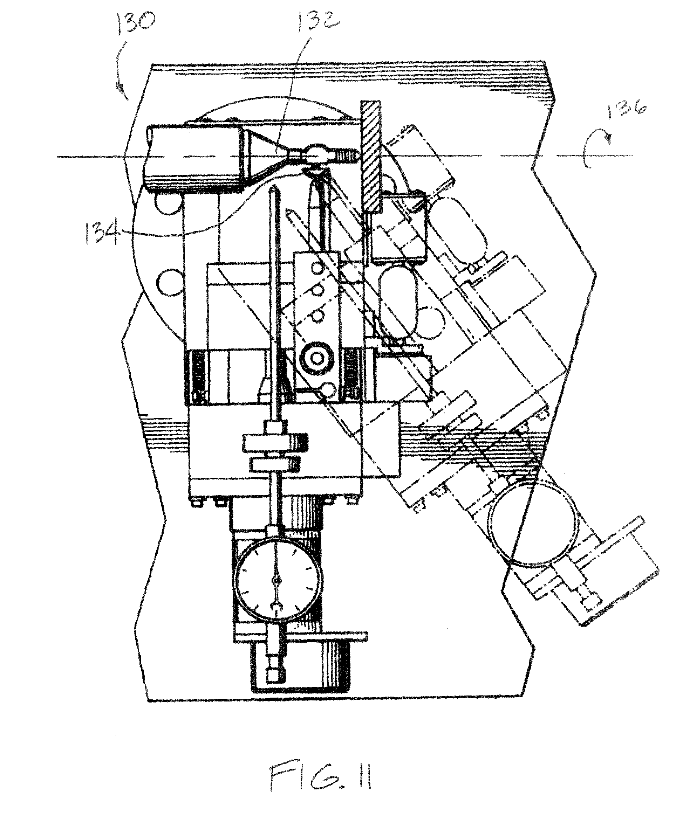

Referring now to FIG. 11, a lathe assembly 130 is shown incorporating a mandrel 134. As discussed in Pat. No. 5,724,120, the mandrel is configured to grip a workpiece 132 to then rotate the workpiece perpendicularly to the axis of rotation 136 of the mandrel 132. This mounting configuration allows the workpiece to be machined radially to create microchannels, radially extending power zones, ballast zones, diagnostic marks, etc.

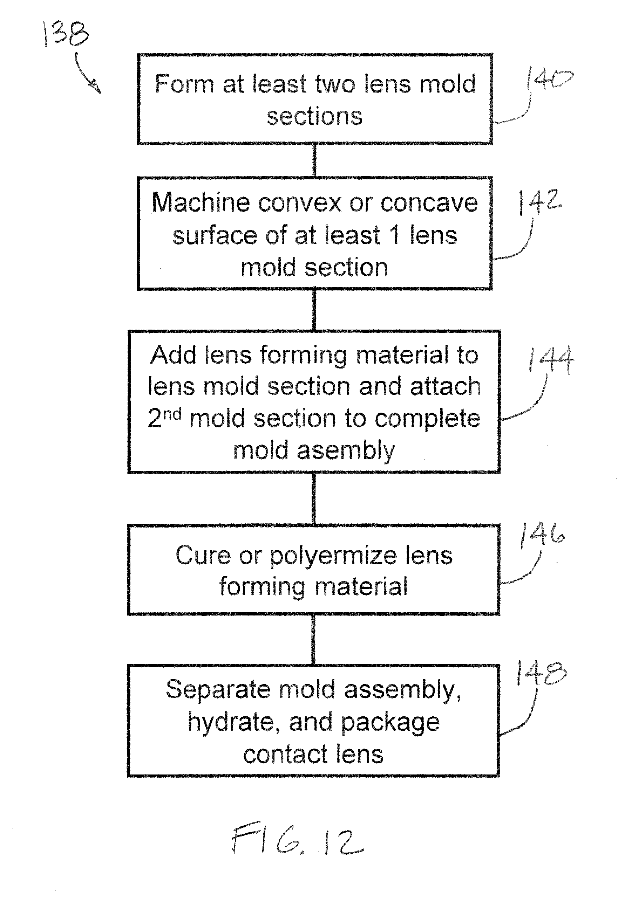

FIG. 12 is a schematic flow chart depicting a method for forming a ophthalmic lens provided in accordance with the present disclosure. The method comprises a mold forming step 140 for forming two lens mold sections, which may embody the mold section 10 shown in FIGs. 1-3 or another mold section. Depending on whether the contact lens to be made from the two lens mold sections has corrections on an anterior surface, a posterior surface, or both, the convex lens-defining surface of one mold section, the concave lens-defining surface of the second mold section, or both the convex lens-defining surface and the concave lens-defining surface is/are lathed, machined, or ablated to add or modify at least one of the following properties: a toric zone, a multifocal zone, a aspheric zone, a ballast zone, a prism zone, a diagnostic mark or other informational marks, such as SKU#, identification mark, and/or orientation mark, an inversion mark, a micro-channel region, a base curve radius modification, and a lens center thickness adjustment. The modified surface may be referred to as a lathed surface portion or a machined surface portion, which differs in at least one surface characteristic from a surface formed directly from a pair of metal mold inserts of a mold fabricating system. Although the modified or added surface or zone is preferably achieved using a lathe assembly, certain corrections may be done using a laser. For example, a diagnostic mark may be added using a prior art laser assembly disclosed in Pat. No. 5,061,840 to Portney et al., the contents of which are expressly incorporated herein by reference. Furthermore, surface debris from laser ablation may be removed using the apparatus and methods disclosed in Pat. No. 6,710,294 to Lawson, the contents of which are expressly incorporated herein by reference. In addition, a lens mold section or two lens mold sections of a lens mold assembly may be both lathed and laser ablated to form the desired lens mold cavity for forming an ophthalmic lens having desired ophthalmic lens specifications and marks.

Following the machining step, lens forming material is added to one of the lens mold sections, preferably to the concave lens-defining surface of one of the lens mold sections. In one embodiment, the lens forming material is a polymerizable hydrogel lens forming material. In another embodiment, the lens forming material or polymerizable ophthalmic lens precursor composition includes a silicone-containing material and is used to form a silicone hydrogel lens. In yet another embodiment, the lens forming material is a 2-hydroxyethylmethacrylate (HEMA) based hydrogel material. In a preferred embodiment, the lens forming material is a silicone hydrogel material. In a more preferred embodiment, the lens forming material is a silicone hydrogel material disclosed in co-pending application Ser. No. 11/213,437, filed August 26, 2005, entitled "SILICONE HYDROGEL CONTACT LENSES", contents of which are expressly incorporated herein by reference. Other exemplary lens forming materials for forming silicone hydrogel contact lenses are disclosed in U.S. Pat. Nos. 4,121,896; 4,495,313; 4,565,348; 4,640,489; 4,889,664; 4,985,186; 5,039,459; 5,080,839; 5,094,609; 5,260,000; 5,607,518; 5,760,100; 5,850,107; 5,935,492; 6,099,852; 6,367,929; 6,822,016; 6,867,245; 6,869,549; 6,939,487; and U.S. Patent Publication Nos. 20030125498; 20050154080; and 20050191335, the contents of each of which are expressly incorporated herein by reference. Additional silicone hydrogel lens materials used in the present methods include, without limitation, comfilcon A, enfilcon A, lotrafilcon A, lotrafilcon B, balafilcon A, senofilcon A, or galyfilcon A. Thus, in accordance with aspects of the present invention, polymerizable silicone hydrogel ophthalmic lens precursor or polymerizable hydrogel ophthalmic lens precursor may be used with a lens mold assembly that has a male lens-forming surface, a female lens-forming surface, or both modified by a lathe assembly or a laser to form an ophthalmic lens product having custom ophthalmic lens specifications without the need for post-cure lathing the ophthalmic lens product.

The lens forming material is allowed to cure or polymerize in step 146. As is well known in the art, irradiation with light, such as ultraviolet light or visible light, or heat exposure or some other non-thermal method may be employed to cure the lens forming material. Finally, the two mold sections are separated in step 148. The cured ophthalmic lens is then removed or de-lensed from the mold assembly, undergoes an extraction step, undergoes a hydration step, and is packaged and sterilized and ready for delivery. In an alternative embodiment, the cured ophthalmic lens may be extracted and hydrated in a combined step performed at a single station in a ophthalmic lens production line, which may involve placing the lens in several different batches of extraction and hydration mediums. In yet another alternative embodiment, the hydrated ophthalmic lens is inspected prior to being packaged.

Thus, in accordance with aspects of the present invention, several standard lens mold assemblies formed from plastic injection molding using a single metal mold tool set, which typically includes a front curve molding insert and a back curve molding insert, may nonetheless produce ophthalmic lenses with different parameters or corrections when practice in accordance with aspects of the present invention. For example, a first mold assembly, which includes at least two lens mold sections, may be machined to have a certain base curve and a second mold assembly produced from the same mold tool set may be machined to have a different base curve so that the two ophthalmic lens products formed from the two mold assemblies will have two different lens parameters or corrections. For ease of discussion, a metal mold tool set for fabricating a lens mold assembly, which includes two different mold sections, may include two or more pairs of front and back curve metal mold inserts with each mold section formed from at least a pair of metal mold inserts.

Furthermore, while the mold assemblies discussed herein incorporate a mold section that may be used to form either an anterior lens surface or a posterior lens surface of an ophthalmic lens product, alternatively each mold section of a two-part lens mold assembly is configured to be used to make either a posterior lens surface or an anterior lens surface of an ophthalmic lens product but not both. In other words, a first mold tool set, which typically comprises a front curve molding insert and a back curve molding insert, may be used to make a first lens mold section for forming a posterior lens surface and a different, i.e., second, mold tool set may be used to make a second lens mold section for forming an anterior lens surface of an ophthalmic lens product, which together comprise a lens mold assembly. The two mold tool sets can thus produce a first lens mold assembly, a second lens mold assembly, and a third lens mold assembly, etc. that can subsequently be machined, using a laser to ablate or a lathe to remove mold material(s) or section(s) to produce a custom lens defining surface such that an ophthalmic lens product produced from any one of the lens mold assembly will yield an ophthalmic lens having parameters or corrections corresponding to the corrections made directly to the particular lens mold assembly.

In accordance with further aspects of the present invention, an ophthalmic lens mold assembly for making an ophthalmic lens product is provided wherein a lens mold section blank is formed from a mold stock material, such as from an EVOH stock material using lathing or laser ablating. A portion of the lens mold section blank is then removed to form an ophthalmic lens mold section having an ophthalmic lens forming surface having desired corrections or parameters for an ophthalmic lens produced using the ophthalmic lens mold section, such as a radius of curvature corresponding to a back surface or a front surface formed therefrom. A corresponding lens mold section forming part of the lens mold assembly, i.e., pair of lens mold sections, may then be made using the same procedure from a mold stock material.

The systems and processes described elsewhere herein advantageously address manufacturing needs over a spectrum of ophthalmic lens product requirements. For example, a manufacturing process may be established to produce a volume or batch of ophthalmic lens products using standard cast molding techniques after one or both mold sections have been machined. Such manufacturing processes can address, for example, the production of contact lenses in specifications that are suitable for a minor amount of lens wearers on a spectrum of all lens wearers. For example, with the present methods and mold sections, extended range contact lenses or made-to-order contact lenses can be successfully produced. In one embodiment, this may be implemented by machining or laser ablating one or both of the lens mold sections of the lens mold assembly taking the more common manufacturing process described immediately above and then machining a toric zone, a ballast zone, etc. to address the special correction requirements. Thus, the number of different sets of metal mold inserts in a mold fabricating system for producing different mold assemblies may be reduced by aspects of the present invention. The same product requirements can instead be addressed by taking a mold assembly produced from the system for making the specific but more common lens products and then lathing or ablating one or both mold sections of the mold assembly for use in making a custom ophthalmic lens product. Accordingly, aspects of the present invention include a system or assembly for forming standard mold assemblies for making a first set of ophthalmic lens products and wherein the same standard mold assemblies may be lathed or laser ablated to make second, third, or greater sets of ophthalmic lens products and wherein each subsequent set of ophthalmic lens products have vision correction features that differ from lens products produced from the other sets.

Although embodiments of machineable lens molds sections are discussed, many modifications and variations will be apparent to those skilled in the art. For example, different molds section having multiple over flow chambers may be used and mold assemblies shown in U.S. Pat. Nos. 6,405,993, 5,137,441, and 5,620,717, European Application No. EP 0 367 513 A2, and PCT Publication No. WO 98/45749 may also be used for further machining. Furthermore, it is understood and contemplated that features specifically discussed for one embodiment may be adopted for inclusion with another embodiment, provided the functions are compatible. For example, while certain surface features or zones may be discussed for one lens mold section and different surface features or zones may be for a different lens mold section, the features can be combined for one mold section provided they are compatible and produce the desired corrections. In yet another example, a mold section may be machined from a plastic stock material, such as a solid piece of EVOH material, and a lens-forming surface of the mold section machined to include a corrected field. Still furthermore, where the terms first, second, R1, R2, near, far, etc., are used in the context of distinguishing a point from another point or one object from another object, they are to be construed broadly to merely distinguish one object or point from another object or point and do not necessary include fixed values or ranges Accordingly, it is to be understood that the machineable molds sections and the methods for machining them according to principles of this invention may be embodied other than as specifically described herein. The invention is also defined in the following claims.

In a further detailed embodiment, a method of producing an ophthalmic lens, such as a contact lens, comprises providing a back surface mold section and a front surface mold section. The back surface mold section provides the back surface of the ophthalmic lens produced in the mold assembly. The front surface mold section provides the front surface of the ophthalmic lens so produced. The optical surface of the back surface mold section can be machined as described herein. The front surface mold section has a spherical lens forming surface and forms an anterior lens surface with a spherical power curve. The lenses in this embodiment are typically molded thicker than other conventionally cast molded lenses. After polymerization, as discussed herein, the front surface mold section is separated from the back surface mold section. The polymerized lens remains attached to the back surface mold section. The back surface mold section with the polymerized lens attached thereto is placed on a lathe, and the front surface of the polymerized lens is lathed to provide specified optical properties to the final lens. After the lathing of the lens, the lens is separated from the back surface mold section and is washed, inspected, packaged, and sterilized, as discussed herein.

As disclosed herein, the present invention is directed to a method for producing an ophthalmic lens mold section, comprising: forming a plastic ophthalmic lens mold section blank from a plastic material; and removing a portion of the ophthalmic lens mold section blank to form an ophthalmic lens mold section including an ophthalmic lens forming surface having a radius of curvature corresponding to a back surface or a front surface of an ophthalmic lens produced using the ophthalmic lens mold section. In one example, the method is a method wherein the forming of the plastic ophthalmic lens mold section blank comprises injection molding a thermoplastic material into an ophthalmic lens mold shaped cavity. In another example, the method is a method wherein the ophthalmic lens mold section blank comprises an ethylene-vinyl alcohol copolymer material. In another example, the method is a method wherein the removing comprises lathing a portion of the blank to form the ophthalmic lens mold section. In another example, the method is a method wherein the ophthalmic lens forming surface so formed has a radius of curvature corresponding to a back surface or a front surface of a contact lens. In yet another example, the method is a method wherein the portion removed from the ophthalmic lens mold section blank forms a concave ophthalmic lens forming surface having a curvature that determines the optical power of the ophthalmic lens obtained from an ophthalmic lens shaped cavity formed between the concave ophthalmic lens forming surface and a convex ophthalmic lens forming surface of a second ophthalmic lens mold section which determines the curvature of a back surface of the ophthalmic lens.

As disclosed herein, the present invention is also directed to an ophthalmic lens mold assembly, comprising: a first plastic mold section including a first lens forming surface having a concave curvature; a second plastic mold section including a second lens forming surface having a convex curvature, the second mold section engaged with the first mold section to form an ophthalmic lens shaped cavity between the first lens forming surface and the second lens forming surface; wherein the first lens forming surface, the second lens forming surface, or both the first and second lens forming surfaces include a lathed surface portion. In one example, the ophthalmic lens mold assembly is an ophthalmic lens mold assembly wherein the first and second mold sections comprise an ethylene-vinyl alcohol copolymer material. In another example, the ophthalmic lens mold assembly further comprises a polymerizable silicone hydrogel ophthalmic lens precursor composition disposed in the lens shaped cavity. In another example, the ophthalmic lens mold assembly further comprises a polymerized silicone hydrogel contact lens product disposed in the lens shaped cavity. In another example, the ophthalmic lens mold assembly is an ophthalmic lens mold assembly wherein the lens shaped cavity is shaped as a contact lens. In another example, the ophthalmic lens mold assembly is an ophthalmic lens mold assembly wherein the lathed surface portion is effective in forming a feature of a contact lens selected from the group consisting of a toric optical zone, a multifocal optical zone, an aspheric zone, a ballast zone, a prism zone, a diagnostic mark, a contact lens inversion mark, a micro-channel region, an optical power radius, a base curve radius, a contact lens thickness, and combinations thereof. In another example, the ophthalmic lens mold assembly is an ophthalmic lens mold assembly wherein the lathed surface portion is effective in forming a center thickness of a contact lens. In yet another example, the ophthalmic lens mold assembly is an ophthalmic lens mold assembly wherein at least one of the first lens forming surface and the second lens forming surface includes a mark selected from the group consisting of a mechanically ablated diagnostic mark, a laser ablated diagnostic mark, a mechanically ablated inversion mark, a laser ablated inversion mark, and combinations thereof.

As disclosed herein, the present invention is also directed to an ophthalmic lens mold assembly, comprising: a first mold section including a lens-defining surface; a first surface section of the lens-defining surface comprising a lathed zone formed by a lathe assembly and a second surface section of the lens-defining surface formed by injection molding; a second mold section comprising a lens-defining surface; and wherein the first mold section is engaged to the second mold section and the lens-defining surface of the first mold section directly faces the lens-defining surface of the second mold section.

As disclosed herein, the present invention is also directed to a method for producing an ophthalmic lens, comprising: providing a first plastic mold section blank; lathing a portion of the first plastic mold section blank to produce a lathed first ophthalmic lens mold section including a lathed ophthalmic lens-forming surface; placing the first ophthalmic lens mold section in contact with a second plastic ophthalmic lens mold section to form an ophthalmic lens mold assembly having an ophthalmic lens shaped cavity containing a polymerizable ophthalmic lens precursor composition; and curing the polymerizable ophthalmic lens precursor composition in the ophthalmic lens mold assembly to form a polymerized ophthalmic lens product. In one example, the method is a method wherein wherein the first mold section blank is an injection molded thermoplastic element obtained from an ophthalmic lens mold cavity that includes an ophthalmic lens mold insert. In another example, the method further comprises lathing a portion of the ophthalmic lens mold insert prior to placing the insert in a mold making system for making a plastic mold section blank. In another example, the method is a method wherein the second ophthalmic lens mold section includes a lathed ophthalmic lens-forming surface produced by lathing a portion of a second mold section blank. In another example, the method is a method wherein the polymerizable ophthalmic lens precursor composition is a silicone hydrogel precursor composition. In another example, the method is a method wherein the first ophthalmic lens mold section, the second ophthalmic lens mold section, or both the first and second ophthalmic lens mold sections comprise an ethylene-vinyl alcohol copolymer material. In another example, the method is a method wherein the first ophthalmic lens mold section, the second ophthalmic lens mold section, or both the first and second ophthalmic lens mold sections comprise a polypropylene resin. In another example, the method is a method wherein the polymerized ophthalmic lens product is a polymerized silicone hydrogel contact lens product. In another example, the method is a method wherein the polymerized ophthalmic lens product is a polymerized silicone hydrogel contact lens product. In another example, the method further comprises demolding the ophthalmic lens mold assembly to produce an ophthalmic lens mold section having the polymerized ophthalmic lens product adhered thereto; and delensing the polymerized ophthalmic lens product from the demolded ophthalmic lens mold section to which the lens product is adhered, to produce a delensed polymerized ophthalmic lens product. In another example, the method further comprises contacting the delensed polymerized ophthalmic lens product with an extraction medium to produce an extracted ophthalmic lens product. In another example, the method further comprises contacting the delensed ophthalmic lens product with an aqueous liquid to form a hydrated ophthalmic lens; inspecting the hydrated ophthalmic lens for lens defects; and placing the inspected hydrated ophthalmic lens in a package. In another example, the method further comprises demolding the ophthalmic lens mold assembly to produce an ophthalmic lens mold section having the polymerized ophthalmic lens product adhered thereto; delensing the polymerized ophthalmic lens product from the demolded ophthalmic lens mold section to which the lens product is adhered, to produce a delensed polymerized ophthalmic lens product; contacting the delensed polymerized ophthalmic lens product with an extraction medium to produce an extracted ophthalmic lens product; contacting the extracted ophthalmic lens product with an aqueous liquid to form a hydrated ophthalmic lens; inspecting the hydrated ophthalmic lens for lens defects; and placing the inspected hydrated ophthalmic lens in a package. In another example, the method further comprises packaging the ophthalmic lens product without post-cure lathing the ophthalmic lens product.

As disclosed herein, the present invention is also directed to a method for producing an ophthalmic lens, comprising: providing a first ophthalmic lens mold section including a first ophthalmic lens-defining surface; placing a polymerizable lens precursor composition in contact with the first ophthalmic lens-defining surface; placing a second ophthalmic lens mold section in contact with the first ophthalmic lens mold section to form an ophthalmic lens mold assembly including an ophthalmic lens shaped cavity between the first ophthalmic lens-forming surface and a second ophthalmic lens-forming surface of the second ophthalmic lens mold section, and containing the polymerizable lens precursor composition; curing the polymerizable lens precursor composition in the ophthalmic lens mold assembly to form a polymerized product, wherein the lens-forming surface of the first ophthalmic lens mold section, the second ophthalmic lens mold section, or both, includes a lathed portion.

As disclosed herein, the present invention is also directed to a method for producing a plurality of ophthalmic lenses having different ophthalmic lens specifications using one set of ophthalmic lens mold inserts, comprising: forming a plurality of first plastic ophthalmic lens mold section blanks and a plurality of second plastic ophthalmic lens mold section blanks using one set of ophthalmic lens mold inserts; lathing a portion of at least one of the first mold section blanks and the second mold section blanks to form a lathed lens-forming surface of an ophthalmic lens mold section effective in forming a polymerized ophthalmic lens having a first set of ophthalmic lens specifications when obtained from an ophthalmic lens mold assembly including one first mold section engaged with one second mold section; lathing a portion of at least one different first mold section blanks and different second mold section blanks to form a lathed lens-forming surface of a second ophthalmic lens mold section effective in forming a polymerized ophthalmic lens having a second different set of ophthalmic lens specifications when obtained from an ophthalmic lens mold assembly including one first mold section engaged with one second mold section; providing a polymerizable ophthalmic lens precursor composition in an ophthalmic lens shaped cavity of each of the ophthalmic lens mold assemblies; and curing the polymerizable ophthalmic lens precursor composition to form a plurality of polymerized ophthalmic lens products having different ophthalmic lens specifications.

As disclosed herein, the present invention is also directed to a method for molding an ophthalmic lens comprising the steps: forming a first mold section and a second mold section by injection molding; lathing a lens-forming surface on at least one of the first mold section and the second mold section; providing a polymerizable lens forming material in a lens-shaped cavity formed by engaging the first mold section with the second mold section; and curing the lens forming material to produce a polymerized ophthalmic lens product.

As disclosed herein, the present invention is also directed to a method for forming an ophthalmic lens without post-cure lathing comprising: forming a first mold section and a second mold section by injection molding, wherein the first mold section and the second mold section each comprises a lens-defining surface comprising a spherical radius of curvature; lathing the lens-defining surface of at least one of the first mold section and the second mold section so that the spherical radius of curvature changes to a second spherical radius of curvature; adding lens forming material into a lens cavity defined by a space formed by engaging the first mold section with the second mold section; and curing the lens forming material to produce an ophthalmic lens product without post-cure lathing the ophthalmic lens product.

As disclosed herein, the present method is also directed to a method for forming two ophthalmic lenses of different correction parameters without post-cure lathing comprising the steps: forming a first mold assembly and a second mold assembly from a metal mold tool set, each mold assembly comprising a first mold section and a second mold section; lathing a lens-defining surface of at least one of the first mold section and the second mold section of the first mold assembly to provide a surface comprising a spherical radius of curvature R1; lathing a lens-defining surface of at least one of the first mold section and the second mold section of the second mold assembly to provide a surface comprising a spherical radius of curvature R2; adding a polymerizable ophthalmic lens precursor composition in a lens forming cavity of each of the first mold assembly and the second mold assembly; forming a first ophthalmic lens product from the first mold assembly; forming a second ophthalmic lens product from the second mold assembly; and wherein R2 has a different dimension than R1. In one example, the method is a method wherein the forming of the first mold assembly and the second mold assembly comprises injection molding a thermoplastic material into a pair of metal mold inserts. In another example, the method is a method wherein the first mold assembly comprises an ethylene-vinyl alcohol copolymer material. In another example, the method further comprises ablating a section of the lens-defining surface of the first mold assembly or the second mold assembly using a laser. In yet another example, the method is a method wherein the lathing step forms a concave ophthalmic lens forming surface having a curvature that determines an optical power of the ophthalmic lens product obtained from adding and curing the polymerizable ophthalmic lens precursor composition in the lens forming cavity of the first mold assembly or the second mold assembly.

As disclosed herein, the present invention is also directed to a method for producing a customized ophthalmic lens mold assembly comprising: selecting a standard ophthalmic mold assembly from a plurality of ophthalmic standard mold assemblies produced from a set of metal mold inserts, said standard ophthalmic mold assembly comprising a first mold section and a second mold section for defining a first lens forming mold cavity having a first configuration; and modifying a surface of the first mold section, the second mold section, or both so that the first mold section and the second mold section define a second lens forming mold cavity having a second configuration. In one example, the method further comprises placing a polymerizable lens precursor composition in contact with the second lens forming mold cavity. In another example, the method further comprises curing the polymerizable lens precursor composition to form a polymerized product. In yet another example, the method is a method wherein the surface of the first mold section, the second mold section or both are modified by a rotary cut or a interpolated cut using a lathe assembly.

## Claims

1. A method for producing an ophthalmic lens, comprising:
providing a first plastic mold section blank;
lathing a portion of the first plastic mold section blank to produce a lathed first ophthalmic lens mold section including a lathed ophthalmic lens-forming surface;
placing the first ophthalmic lens mold section in contact with a second plastic ophthalmic lens mold section to form an ophthalmic lens mold assembly having an ophthalmic lens shaped cavity containing a polymerizable ophthalmic lens precursor composition; and
curing the polymerizable ophthalmic lens precursor composition in the ophthalmic lens mold assembly to form a polymerized ophthalmic lens product.

2. The method of claim 1, wherein the first mold section blank is an injection molded thermoplastic element obtained from an ophthalmic lens mold cavity that includes an ophthalmic lens mold insert.

3. The method of claim 2, further comprising lathing a portion of the ophthalmic lens mold insert prior to placing the insert in a mold making system for making a plastic mold section blank.

4. The method of claim 1, wherein the second ophthalmic lens mold section includes a lathed ophthalmic lens-forming surface produced by lathing a portion of a second mold section blank.

5. The method of claim 1, wherein the polymerizable ophthalmic lens precursor composition is a silicone hydrogel precursor composition.

6. The method of claim 1, wherein the first ophthalmic lens mold section, the second ophthalmic lens mold section, or both the first and second ophthalmic lens mold sections comprise an ethylene-vinyl alcohol copolymer material.

7. The method of claim 1, wherein the first ophthalmic lens mold section, the second ophthalmic lens mold section, or both the first and second ophthalmic lens mold sections comprise a polypropylene resin.

8. The method of claim 1, wherein the polymerized ophthalmic lens product is a polymerized silicone hydrogel contact lens product.

9. The method of claim 1, further comprising:
demolding the ophthalmic lens mold assembly to produce an ophthalmic lens mold section having the polymerized ophthalmic lens product adhered thereto; and
delensing the polymerized ophthalmic lens product from the demolded ophthalmic lens mold section to which the lens product is adhered, to produce a delensed polymerized ophthalmic lens product.

10. The method of claim 9, further comprising:
contacting the delensed polymerized ophthalmic lens product with an extraction medium to produce an extracted ophthalmic lens product.

11. The method of claim 9, further comprising:
contacting the delensed ophthalmic lens product with an aqueous liquid to form a hydrated ophthalmic lens;
inspecting the hydrated ophthalmic lens for lens defects; and
placing the inspected hydrated ophthalmic lens in a package.

12. The method of claim 1, further comprising:
packaging the ophthalmic lens product without post-cure lathing the ophthalmic lens product.

13. The method of claim 1, wherein the lathed ophthalmic lens-forming surface is effective in forming a feature of the polymerized ophthalmic lens product selected from the group consisting of a toric optical zone, a multifocal optical zone, an aspheric zone, a ballast zone, a prism zone, a diagnostic mark, a contact lens inversion mark, a micro-channel region, an optical power radius, a base curve radius, a contact lens thickness, and combinations thereof.

14. An ophthalmic lens mold assembly, comprising:
a first plastic mold section including a first lens forming surface having a concave curvature;
a second plastic mold section including a second lens forming surface having a convex curvature, the second mold section engaged with the first mold section to form an ophthalmic lens shaped cavity between the first lens forming surface and the second lens forming surface;
wherein the first lens forming surface, the second lens forming surface, or both the first and second lens forming surfaces include a lathed surface portion.

15. The assembly of claim 14, wherein at least one of the first lens forming surface and the second lens forming surface includes a mark selected from the group consisting of a mechanically ablated diagnostic mark, a laser ablated diagnostic mark, a mechanically ablated inversion mark, a laser ablated inversion mark, and combinations thereof.
